# EUROPEAN PATENT SPECIFICATION

(11) **EP 1 503 601 B1**
(45) Date of publication and mention of the grant of the patent: **10.10.2018**
(21) Application number: 04103426.5
(22) Date of filing: 19.07.2004
(51) Int. Cl.: H04W 8/18, H04W 92/02

(54) **Method, system and network node of providing value added services, VAS, to users roaming between different communication networks, i.e 2G and 3G.**
Verfahren, System und Netzwerkgerät zur Bereitstellung von Mehrwertsdiensten, VAS, in verschiedenen Kommunikationsnetzwerken, z.B 2G und 3G.
Procédé, système et dispositif pour fournir des services à valeur ajoutée, VAS, dans des réseaux de communication différents, par exemple 2G et 3G.

(30) Priority: 22.07.2003 FI 20031098
(43) Date of publication of application: 02.02.2005
(73) Proprietor: Telia Finland Oyj, 00510 Helsinki (FI)
(72) Inventor: Kairamo, Juha, 90910 Kontio (FI)
(74) Representative: Kolster Oy Ab

(56) References cited:
- EP-A- 1 341 391
- US-A- 6 026 298
- US-A1- 2002 061 745
- US-B1- 6 298 232
- HEESEON LIM ET AL: "Interworking of SMS between GSM based GMPCS system and IS-41 based cellular system using I-SMC" WIRELESS COMMUNICATIONS AND NETWORKING CONFERENCE, 1999. WCNC. 1999 IEEE NEW ORLEANS, LA, USA 21-24 SEPT. 1999, PISCATAWAY, NJ, USA,IEEE, US, 21 September 1999 (1999-09-21), pages 1432-1436, XP010353707 ISBN: 0-7803-5668-3
- "digital cellular telecommunications systems (phase 2+)(gsm); universal mobile telecommunications system (umts); functional stage 2 description of location services (3gpp ts 23.271 version 4.3.0 release 4)" ETSI, October 2001 (2001-10), XP002196637

## Description

### BACKGROUND OF THE INVENTION

The invention relates to telecommunications and in particular to a method, a system implementing the method and a network node for harmonizing service experience of a subscriber in a telecommunications system, which comprises at least two separate telecommunications networks.

The quality and good functionality of services in various situations are one of the most important competition factors to a provider of telecommunications services. With the growing number of possibilities and alternatives, the number of selections and settings a subscriber has to make also increases constantly, while subscribers are relatively uninterested to repeatedly adapt their own service concepts. From the service providers' point of view, it is important to be able to provide the subscriber with a functional service concept and offer it as a harmonized service which is as easy to use as possible, even when the user switches from one telecommunications technique to another or combines different communication forms.

A basic example of harmonized service concept is automatic handover in a mobile communication system allowing the subscriber to roam from one cell to another within the radio coverage area of the subscriber's own network while the mobile communication system automatically performs handover from one cell to another without the subscriber having to pay attention to service maintenance. This level of service is nowadays taken for granted by the subscribers.

Mobile operators all over the world have implemented connection arrangements and made mutual agreements, thanks to which subscribers may roam from the coverage area of their own mobile communication networks to the coverage area of another mobile communication network so that the mobile communication networks automatically enable accessibility to the services supported by both networks. Such roaming arrangements require a generally agreed, typically standardized signalling protocol between the networks. Furthermore, the part identifying the mobile subscriber, usually the SIM card (Subscriber Identification Module), has to be inserted or insertable into a mobile communication device supporting the radio interface of the network where the subscriber is at a given time. In connection with this option, subscribers have at least so far accepted compromises, for example the fact that calls are frequently cut off and that not all home network services are automatically accessible when the user visits another network.

The European Telecommunications Standards Institute (ETSI) is defining an intelligent network solution applicable to the GSM system known as Customised Applications for Mobile Enhanced Logic (CAMEL), which allows network operators to provide operator-specific intelligent network services for their subscribers when they are roaming in another mobile communication network. The CAMEL solution is based on the property of intelligent networks (IN) where the service logic is separated from the network elements implementing switching (Service Switching Point, SSP) into dedicated service control points SCP and utilizes an IN SSP-SCP interface between the service control points and the service switching point.

Prior art solutions are known from EP 0 702 497 A3 and WO 93/25051, for example, for ensuring that the data included in the subscriber databases of a mobile communication system are updated by real time data. For intelligent networks, corresponding solutions have been disclosed for example in US 5,579,318 for parallel maintenance of data in the network elements of a telecommunications network.

Since it is no longer a question of making services of a first network accessible via a second network, but a question of creating a service concept similar to that of the first network for a single client by means of a second network, general prior art solutions are not available. However, it is evident that clients have a need for this kind of harmonized service experience, this need being an important factor to the service providing party with respect to competition and sales of new products. For example, a second-generation (2G) mobile communication network subscriber, who has compiled a practical service concept for himself by means of value added services, is likely unwilling to spend time in searching a third-generation (3G) network for corresponding functions and trying to figure out which parameter combinations provide the same settings. Even if a certain service were available in the same format in 2G and 3G networks, re-defining the definitions may easily become laborious.

Heeson Lim et al.: "Interworking of SMS between GSM based GMPCS system and IS-41 based cellular system using I-SMC", Wireless communications and networking conference, 1999. WCNC. 1999 IEEE New Orleans LA USA 21.-24.9.1999, 21.9.1999, p. 1432-1436, XP010353707, ISBN: 0-7803-5668-3, discloses a scheme for interworking of SMS between a GMPCS network and a cellular network with different interface standards.

US 2002/0 061 745 A1 discloses a roaming service system in a CDMA service area for a GSM service subscriber.

US 6 298 232 B1 discloses an interworking function which provides home network functionality to a subscriber roaming in a visited network which operates according to a different protocol.

### BRIEF DESCRIPTION OF THE INVENTION

The object of the invention is to provide a method and an apparatus implementing the method so as to solve the above-mentioned problem related to maintaining subscriber experience when the subscriber switches from using value added services of a first network to using value added services of a second network. The object of the invention is achieved by a method and a system which are characterized by what is stated in the independent claims. Preferred embodiments of the invention are disclosed in the dependent claims.

The invention is based on the idea that on activation of a value added service action in a first network, an action record related to this value added service is produced. This action record is transferred to a network node arranged between the first and the second network. On the basis of the data separated from the action record, the network node maps the value added service action of the first network into a corresponding value added service action of the second network, and transfers the value added service definitions of the second network resulting from the mapping to a service platform of the second network. After mapping, the network node preferably determines any missing data needed to determine the value added service of the second network, finds out the subscriber's home location register and asks it for the missing data.

An advantage of the method and system according to the invention is that they significantly improve the transfer of the service experience of a subscriber using value added services from one network to another in as harmonized form as possible.

### BRIEF DESCRIPTION OF THE FIGURES

The invention will now be described in greater detail by means of preferred embodiments, with reference to the accompanying drawings, in which
Figure 1 illustrates a block diagram of a simplified GSM mobile communication system (prior art);
Figure 2 schematically illustrates a structure of a third-generation mobile communication system (prior art);
Figure 3 illustrates an embodiment of the solution according to the invention in the environment illustrated in Figures 1 and 2;
Figure 4 is a signalling chart illustrating functionalities of the embodiment shown in Figure 3;
Figure 5 is a block diagram illustrating the functional structure of servers; and
Figure 6 is a flow chart illustrating an embodiment of the method according to the invention.

### DETAILED DESCRIPTION OF THE INVENTION

The present invention is applicable in any telecommunications system where subscribers may create a personal service concept for the telecommunications network used by them by means of value added services. Such systems include third-generation mobile communication systems, such as the Universal Mobile Telecommunications System (UMTS), and mobile communication systems corresponding to the global GSM system (Global System for Mobile Communications), such as GSM 1800 and PCS (Personal Communications System), and systems based on the above systems, such as GSM 2+ systems. Services of the GSM 2+ stage include GPRS (General Packet Radio Service) and CAMEL (Customised Applications for Mobile network Enhanced Logic). In the following, a preferred embodiment of the invention is described by an example where a mobile subscriber switches from a 2G network to a 3G network.

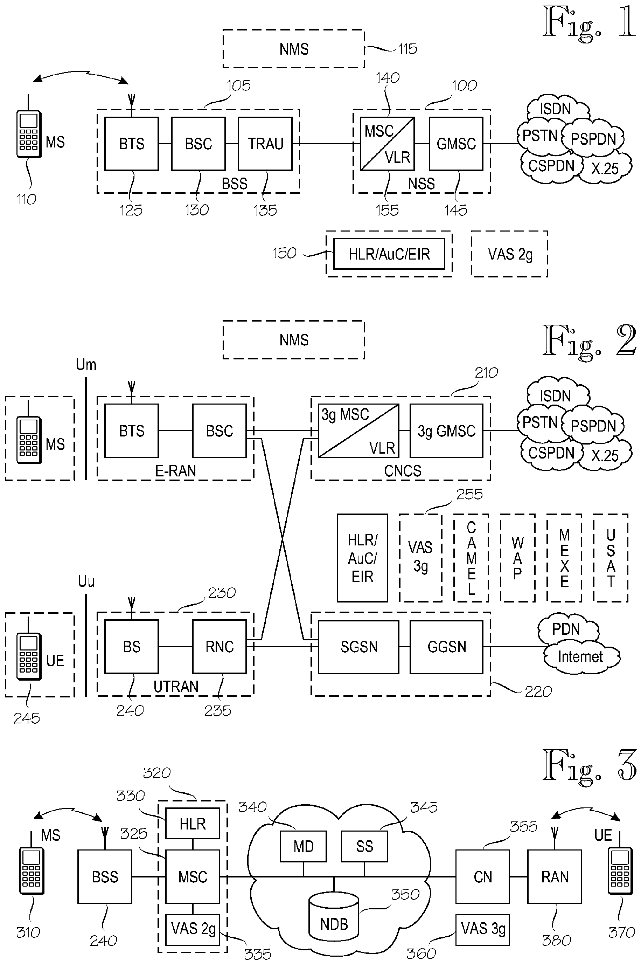

Figure 1 in the attached drawings illustrates a simplified block diagram of a GSM mobile communication system. The figure shows only the elements necessary for illustrating the invention but it is self-evident to a person skilled in the art that a mobile communication system also comprises other prior art functions and structures that need not be described here. The mobile communication system comprises four parts: a network subsystem (NSS) 100, a base station system (BSS) 105, a mobile station (MS) 110, and a network management system (NMS) 115. For implementing value added services, a value added service platform (VAS2g) 120 is typically attached to the mobile communication system. Value added services generally refer to services employing standardized interfaces towards the GSM network. The VAS2g most often includes at least a short message centre and voice message service.

The mobile station 110 is connected to a base transceiver station (BTS) 125 via a radio path. The base station system 105 consists of a base station controller (BSC) 130 and base stations 125 under it, and a transcoding and rate adaptation unit (TRAU) 135. The mobile services switching centre (MSC) 140 usually has a plurality of base station controllers 130 under it. The mobile services switching centre 140 communicates with other mobile services switching centres and a gateway mobile services switching centre (GMSC) 145. The GSM network also accesses other networks, such as a public switched telephone network PSTN, another mobile communication network PLMN, or an ISDN network ISDN, via the gateway mobile services switching centre 145. The network management system 115 is responsible for monitoring and controlling system resources and storing data on their use and operation in the entire system. The standardized interface between the base station system 105 and the network subsystem 100 is called an A interface and the one between the mobile station and the base station system is called a Um interface.

The subscriber data of the mobile station 110 are stored permanently in the system's home location register (HLR) 150 and temporarily in the visitor location register (VLR) 155 where the mobile station 110 is at a given time. Information on the visitor location register 155 where the mobile station 110 is at a given time is transmitted to the home location register 150. The network subsystem typically also comprises an authentication centre (AuC) for maintaining data required to identify a subscriber and an equipment identity register (EIR) for maintaining equipment identification data.

The invention is applicable to all value added services of telecommunications systems whose use involves at least one request to a subscriber database. Examples of such value added services include value added services based on USSD service (Unstructured Supplementary Service), short message service (SMS) or multimedia messaging service (MMS), and application utilizing packet-switched data transmission, such as electronic payment. In the following, the invention will be described by means of a USSD service defined in the GSM standard without restricting the invention to this particular example.

The USSD service is a data transfer format defined for the GSM system, enabling data transfer transparent to the rest of the network between a mobile station MS and an entity defined by the mobile network operator. The USSD allows the mobile station and a service application to communicate with each other using symbol sequences in a manner transparent to the mobile station and the network elements in between. For example, incoming calls can be routed to number 123456 by dialling *21*#123456#. The USSD can be employed as a narrow-band transmission path for applications crossing the radio path and providing additional value. USSD requests, notifications and responses include a USSD symbol sequence, as defined in GSM recommendation 03.38.

USSD signalling can be initiated from the mobile station side or from the network side. The mobile communication network may at any time transmit a USSD message to a mobile station logged in the network to transmit information to a subscriber. This operation may be a request (asking the mobile station to provide information) or a notification (requiring no information from the mobile station in the response). No USSD pre-installation is needed, although the services employing the USSD may have to be installed in advance.

According to the above-mentioned ETSI recommendations, USSD signalling takes place between the mobile station and the mobile services switching centre/visitor location register MSC/VLR or home location register HLR. It supports a maximum of 160 bytes per the user's data message. (The upper limit may be fewer than 160 bytes depending on the lower protocol layers). Unlike in the short message service SMS, the USSD does not include a store-and-forward functionality: USSD messages terminating at the mobile station are transmitted to the mobile station immediately or transmission fails (e.g. because the mobile station is not reached).

Figure 2 schematically illustrates a structure of a third-generation mobile communication system on an equal level. Figure 2 shows 3GPP (3^{rd} Generation Partnership Program) R99 stage architecture, which will presumably be developed further in the next stages. The description of the system is, however, intended to illustrate an embodiment of the invention and thus it should not be interpreted as restricting the invention's scope of protection. It should also be noted that even though the names and abbreviations for the 2G and 3G network elements may be the same in Figures 1 and 2, their functionalities may differ from each other significantly.

3G introduces a new radio access interface, WCDMA (Wideband Code Division Multiple Access), to mobile communication. An R99 network comprises a core network (CN), a radio access network (RAN), and user equipment (UE). The core network is divided into two parts, a CN circuit switched domain (CN CS Domain) 210, which comprises mobile services switching centres and gateway mobile services switching centres corresponding to the network subsystem of Figure 1 and implementing circuit-switched services, and a CN packet switched domain (CN PS Domain) 220, which comprises gateway GPRS support nodes (GGSN) and serving GPRS support nodes (SGSN) responsible for packet-switched connections. An important design requirement for 3G has been the possibility of phased transition and thus parallel cooperation with the GSM network. To achieve this, the GSM and WCDMA radio interfaces have typically been configured to comprise broadcast data on surrounding base stations employing another radio access technology.

It is to be assumed that the proportion of circuit-switched connections in mobile communication decreases while packet-switched communication increases. In the 3GPP All-IP scenario, all communication initiating from a radio access network is assumed to be in IP format (Internet Protocol), in which case the core network structure is expected to be developed into a one-piece structure after various stages. However, as such, the core network structure does not have any essential influence on the invention.

The radio access network element implementing the WCDMA radio interface (UMTS (Universal Mobile Telecommunications System) Terrestrial Radio Access Network, UTRAN) 230 comprises one or more radio network controllers (RNC) 235, which control one or more base stations (BS) 240. The standardized interface between the core network and the radio access network is called an lu interface, and the one between the mobile station 245 and the radio access network a Uu interface.

On the connections of the mobile station 245, the radio network controller 235 of the radio access network 230 functions as a serving radio network controller. In some network topologies, the radio network controller may be connected to one or more core networks; for example, in principle one RNC may be connected to several SGSN elements.

The core network also comprises subscriber registers, authentication centres and equipment identity registers known from second-generation systems. In addition, the core network includes a value added service platform 255 and possibly network elements related to other functionalities, such as CAMEL, WAP (Wireless Application Protocol), MexE (Mobile Execution Environment) and USAT (UMTS SIM Application Toolkit).

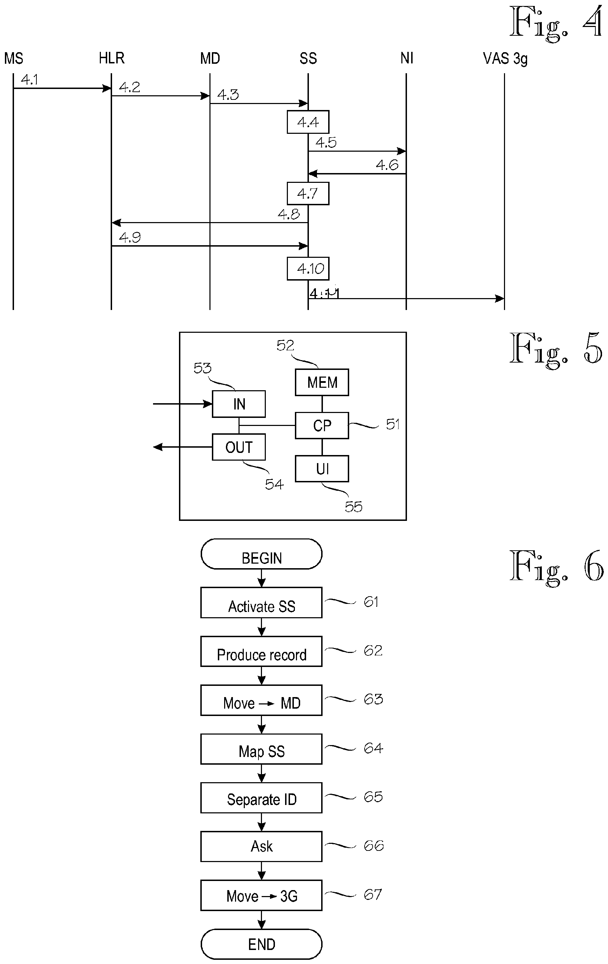

Figure 3 illustrates an embodiment of the solution according to the invention in the environment illustrated in Figures 1 and 2. The situation used as an example relates to harmonization of use experience of a second-generation (2G) mobile communication system subscriber in a third-generation (3G) mobile communication network. On the left hand side in the figure, there are elements of the 2G system, and on the right hand side, elements of the 3G system. Between these elements, there are elements needed to implement the invention. The functionalities of the solution according to Figure 3 are also illustrated in the signalling chart of Figure 4. It should be noted that the figures show only the elements necessary for illustrating the invention, and thus it is self-evident to a person skilled in the art that real mobile communication systems comprise a considerable number of elements not illustrated in the figures. The block diagram in Figure 3 illustrates logical units necessary for understanding the invention, without taking a stand on the physical architecture of the elements. The illustrated mobile communication network elements may be included in the same physical hardware so that they are controlled jointly, or they can be divided into several hardware configurations without deviating from the scope of protection defined by the claims.

In the embodiment shown, the subscriber gives, in a manner known per se, a definition related to a 2G value added service from a second-generation mobile station 310. The definition is transmitted (step 4.1) as a USSD service via the base station system 315 to the mobile services switching centre 325 of the network subsystem 320 and stored in the home location register 330 and/or in the value added service platform 335. On processing the value added service, the mobile services switching centre 325 generates an action record of the event. In the present embodiment, the record includes the following data:
- IMSI: International Mobile Subscriber Identity
- MSISDN: Mobile Subscriber International ISDN Number
- SS_CODE: Value added service identifier
- SS_ACTION: Value added service action identifier

In the present embodiment, in addition to the signalling connections shown in Figure 2, an application server 340 is arranged between the subsystem of the 2G network and the 3G core network. This server is a device for performing application-level conversions between the two different mobile communication systems. In the arrangement according to the invention, an interface, for example an FTP connection, is provided between the mobile services switching centre and the application server 340 for transferring (step 4.2) the action record produced by the mobile services switching centre to the application server 340. The application server is configured to identify action records of value added services from the data it has received and transmit (step 4.3) them to a server 345. The server is configured to separate the data needed to identify the subscriber, e.g. IMSI and/or MSISDN, from the received action record and utilize them for checking whether the subscriber's value added service needs to be processed considering harmonized subscriber experience (step 4.4). Such checking may be based, for example, on a list of subscribers requiring processing stored in the memory of the application server, on a definition given as the range of subscriber number, or checking may be omitted, in which case the procedure according to the invention is performed on all records received by the server 345.

The server also communicates with one or more internal or external number databases 350, which maintain data on the subscriber's identifiers and the home location register related to the subscriber's identifier. Examples of such databases are databases maintained to provide number transferability. The server 345 is configured to transmit a request (step 4.5) to the number database 350, the request including the data necessary for identifying the subscriber, and to receive (step 4.6) the information returned by the number database from the subscriber's home location register.

The server 345 is further configured to separate an identifier identifying the value added service and an identifier identifying the value added service action, for example SS_CODE and SS_ACTION, from the action record. On the basis of the identifier identifying the value added service, the server 345 maps (step 4.7) a 2G-network service into a 3G-network service. In the present embodiment, this mapping step is relatively simple since USSD value added services are intended to be implemented mainly as such in the 3G network, too. Thus the 2G-network service is mapped into the substantially same 3G-network service, and the mapping comprises mapping of number sequences identifying the subscriber to conform to the protocols of the 3G network. Also in this case, the value added service transferred to another network may include new actions or alternatives.

It is also feasible that some of the value added services of the 2G network are replaced in the 3G network with a service or services which fulfil the same need but are implemented as a different procedure. In that case, the action according to the invention requires a step where this kind of 2G-network service is mapped into another service or other services of the 3G network, and the mapping is stored in the server 345 to enable mapping of future inter-network services.

An example of a way of arranging mapping is to store the mapping table illustrated in Table 1 in the server 345. By means of the table, mapping of the relation between the actions of inter-network value added services is directly available through one search action. The first column in the table lists actions SERV1ACT1, SERV1ACT2, SERV1ACT3 of 2G-network value added service SERV1, and action SERVACT1 of value added service SERV3. The second column in the table lists the corresponding actions srv1act1, srv1act2, srv1act3 of 3G network value added service srv1, actions srv2act1, srv2act2 of value added service srv2, and action srv3act1 of value added service srv3, into which the actions of the 2G-network value added services are mapped. The term 'null' in the table illustrates an alternative where one of the 2G-network value added services is not mapped into a 3G-network value added service. It is clear to a person skilled in the art that there are several ways of implementing the mapping and that the selection of the mapping method is not relevant to the invention's scope of protection.

| **2G** | **3G** |
|---|---|
| SERV1ACT1 | srv1act1 |
| SERV1ACT2 | srv1act2 |
| SERV1ACT3 | srv1act3 |
| SERV2ACT1 | srv2act1+srv1act2 |
| SERV3ACT1 | srv3act1 |
| SERV3ACT2 | null |

An action record typically comprises only some of the data required for introducing a service or adapting an introduced service. When the corresponding 3G-network service has been defined, the server is configured to create a message relating to the value added service concerned and comprising a request for missing parameters of the value added service action. The server 345 transmits this message to the subscriber's home location register (step 4.8) and receives the response message returned by the home location register (step 4.9). On the basis of the received response message, the server creates (step 4.10) an update request message related to the 3G-network value added service and transmits (step 4.11) it via the 3G core network to a service platform 360.

In connection with the above-mentioned example of call transfer, the GSM network mobile 310 subscriber transfers incoming calls to number 123456 by dialling *21*#123456#. Thanks to the method described above, call connections are routed according to an earlier call transform made by the subscriber when the mobile 310 subscriber starts to use a 3G subscriber device 370.

Block diagram in Figure 5 illustrates the functional structure of the servers 340 and 345 shown in Figure 3. It is clear to a person skilled in the art that the application server 340 and server 345 shown in Figure 3 are substantially electronic elements and entities consisting of hardware with circuit arrangements and of software controlling the operation of hardware parts. These entities have various feasible implementations. The server 340, 345 comprises a processor or processing means 51, i.e. a part which may include an arithmetic logic unit, a number of registers and control circuits. The processing means are provided with memory means 52, i.e. a data medium where machine-readable data, programs or subscriber data can be stored. The data medium typically comprises readable and writable memory units (random access memory, RAM) and read-only memory units (read-only memory, ROM). The server also includes an interface unit with input means 53 for receiving data for actions performed by the server, and output means 54 for outputting data processed by the server. An example of output means is a plug-in unit included in the server device and functioning as a processing gateway for information transmitted to its external connection points.

For enabling controlling and monitoring the server's user, the server may also include a user interface 55 for receiving commands given by the user and outputting desired data for the user. The user interface typically comprises an input device, for example a keyboard, touch screen, microphone, or the like. The user interface typically also includes at least one output device, for example a printer, screen, loudspeaker, or the like. The processing means 51, memory medium 52, interface unit 53, 54 and user interface 55 are electrically connected to one another for performing operations related to the received and/or stored data systematically according to predetermined, substantially programmed procedures. In the system according to the invention, such operations include carrying out the server functionalities described above and in the following.

Figure 6 illustrates an embodiment of the method according to the invention. In the first step, the desired value added service is activated (step 61) in a first network. As a result of activation, an action record is produced from the activation event (step 62), and the record is transferred (step 63) to a server connected to the first and the second network. The server maps (step 64) the first network service into a second network service. The server also separates (step 65) data identifying the subscriber from the action record and uses them for generating a request for information to a database maintaining home location registers corresponding to the subscribers (step 66). After this, the server asks (step 67) the subscriber's home location register for data related to the value added service and value added service action which did not appear from the received action record. On the basis of the received data, the server transfers the data related to the value added service in question to the service platform of the second network (step 68).

It is obvious to a person skilled in the art that the solution described enables various embodiments. The action record can be transferred from the first network to the server via the application server, or the mobile services switching centre may be configured to transfer action records related to the value added services directly to the server. The application server and server may also be integrated into one network element. The arrangement may also be carried out either from the first network to the second network, from the second network to the first network or both ways, i.e. from the first network to the second network and from the second network to the first network. The invention and its embodiments are thus not limited to the examples described above but they may vary within the scope of the claims.

## Claims

1. A method of improving the transfer of service experience of a subscriber from one telecommunications network to another, which comprises a first telecommunications network and a second telecommunications network, and a network node connected to the first and the second telecommunications network, properties of the first telecommunications network enabling a first set of value added services in the first telecommunications network, and properties of the second telecommunications network enabling a second set of value added services in the second telecommunications network, each value added service of the first set comprising a combination of functional telecommunications network properties of the first network and each value added service of the second set comprising a combination of functional telecommunications network properties of the second network, the functional telecommunications network properties being adaptable through value added service actions activated in a subscriber-specific manner, the method comprising
performing (61) a procedure activating a value added service action of a value added service of the first set in the first telecommunications network,
producing (62) in the first telecommunications network an action record which comprises at least data for identifying the value added service and a value added service action to be activated in the first telecommunications network;
transferring the action record to the network node;
mapping (64) in the network node the value added service of the first set into a value added service of the second set, and the value added service action of the value added service of the first set into a value added service action of the value added service of the second set;
transferring (63) data on the value added service action of the value added service of the second set resulting from mapping into the second telecommunications network; and
adapting the functional telecommunications network properties of the second telecommunications network comprised in the value added service of the second set by performing the value added service action in the service platform of the second telecommunications network;
wherein the method comprises
separating, in the network node, the data needed to identify the subscriber from the action record, and
utilizing, in the network node, said data for checking whether the subscriber's value added service needs to be processed considering improved transfer of subscriber experience.

2. A method according to claim 1, further comprising the steps of
inserting (4.1) the subscriber's identification data into the action record;
determining (4.4) the data required to activate the value added service action of the second network;
checking (4.4) whether the data required to activate the value added service action of the second network are available;
in response to the data not being available:
determining (4.5, 4.6) the subscriber's home location register on the basis of the subscriber's identification data;
asking (4.8, 4.9) the subscriber's home location register for the data required to activate the value added service action of the second network.

3. A method according to claim 1 or 2, further comprising the steps of
creating a mapping table from the mappings between the value added service actions of the first set and the value added service actions of the second set; and
storing the mapping table in the network node.

4. A method according to claim 1, further comprising the steps of
inserting (4.1) the subscriber's identification data into the action record;
determining (4.4) a corresponding value added service of the second set on the basis of the data identifying a value added service of the first set;
checking (4.4) whether the corresponding value added service of the second set is already activated in the second telecommunications network;
in response to the value added service of the second set not being activated:
determining (4.5, 4.6) the subscriber's home location register on the basis of the subscriber's identification data;
asking (4.8, 4.9) the subscriber's home location register for the data required to activate the value added service of the second network.

5. A telecommunications system comprising a first telecommunications network (310, 315, 320, 325, 330, 335) and a second telecommunications network (355, 360, 370, 380) and a network node (345) connected to the first and the second telecommunications network, properties of the first telecommunications network enabling a first set of value added services in the first telecommunications network and properties of the second telecommunications network enabling a second set of value added services in the second telecommunications network, each value added service of the first set comprising a combination of functional telecommunications network properties of the first network and each value added service of the second set comprising a combination of functional telecommunications network properties of the second network, the functional telecommunications network properties being adaptable through value added service actions activated in a subscriber-specific manner, wherein
a network element (335) of the first telecommunications network comprises
means for processing a value added service action of a value added service of the first set in the first telecommunications network;
means for producing an action record related to a value added service action of the value added service of the first set on processing the value added service of the first set, the action record comprising at least data for identifying the value added service and a value added service action to be activated in the first telecommunications network; and
means for transferring the action record to the network node (345) connected to the first and the second telecommunications network;
the network node (345) comprises means for mapping the value added service of the first set into the value added service of the second set; means for mapping the value added service action of the value added service of the first set into the value added service action of the value added service of the second set; and means for transferring data on the value added service action of the value added service of the second set resulting from the mapping to a network element of the second telecommunications network (360);
a network element (360) of the second telecommunications network comprises means for adapting the functional telecommunications network properties of the second telecommunications network by performing the mapped value added service action of the value added service of the second set;
wherein the network node (345) is configured to separate the data needed to identify the subscriber from the action record, and
utilize said data for checking whether the subscriber's value added service needs to be processed considering improved transfer of subscriber experience.

6. A system according to claim 5, wherein at least one of the first and the second telecommunications system is a mobile communication system.

7. A system according to claim 6, wherein one of the first and the second telecommunications network implements functional properties of a second-generation GSM mobile communication system, and one of the first and the second telecommunication system implements functional properties of a third-generation WCDMA mobile communication system.

8. A system according to any one of claims 5 to 7, wherein the first and the second network are mobile networks managed by one operator and arranged to operate through different radio interfaces.

9. A system according to any one of claims 5 to 7, wherein the first and the second network are mobile networks managed by two different operators and arranged to operate through different radio interfaces.

10. A system according to any one of claims 5 to 7, wherein the first and the second network are networks managed by two different operators and offering a similar terminal interface.

11. A network node (345) for a telecommunications system comprising a first telecommunications network (310, 315, 320, 325, 330, 335) and a second telecommunications network (355, 360, 370, 380), properties of the first telecommunications network enabling a first set of value added services in the first telecommunications network and properties of the second telecommunications network enabling a second set of value added services in the second telecommunications network, each value added service of the first set comprising a combination of functional telecommunications network properties of the first network and each value added service of the second set comprising a combination of functional telecommunications network properties of the second network, the functional telecommunications network properties being adaptable through value added service actions activated in a subscriber-specific manner, wherein the network node (345) comprises means (51, 53) for receiving an action record related to a value added service action of the value added service of the first set from a network element of the first telecommunications network, the action record comprising at least data for identifying the value added service of the first set and a value added service action to be activated in the first telecommunications network and an identity of the subscriber;
means (51, 52) for mapping a value added service of the first set into a value added service of the second set, and a value added service action of the value added service of the first set into a value added service action of the value added service of the second set; and
means for transferring (51, 52, 54) the value added service action of the second set resulting from the mapping to a network element of the second telecommunications network;
wherein the network node (345) is configured to
separate the data needed to identify the subscriber from the action record, and
utilize said data for checking whether the subscriber's value added service needs to be processed considering improved transfer of subscriber experience.

12. A network node (345) according to claim 11, wherein the network node further comprises:
means (51, 52) for determining data required to activate the value added service action of the second network ;
means (51, 52, 53, 54) for checking whether the value added service of the second set has already been activated in the second telecommunications network;
means (51, 52) which in response to the value added service of the second set not being activated:
determine the subscriber's home location register on the basis of the subscriber's identification data; and
ask the subscriber's home location register for the data needed to activate the value added service of the second set.

13. A network node according to claim 11 or 12, wherein the network node (345) further comprises:
means (51, 52) for creating a mapping table from mappings between the value added service actions of the first set and the value added service actions of the second set;
means (51, 52) for storing the mapping table.

14. A network node according to claim 11 or 12, wherein the network node further comprises:
means (51, 53; 55) for receiving the mapping table on the mappings between the value added service actions of the first set and the value added service actions of the second set;
means (51, 52) for storing the mapping table.

15. A network node according to claim 11, wherein the network node (345) further comprises:
means (51, 52) for determining a corresponding value added service of the second set on the basis of data identifying a value added service of the first set;
means (51, 52, 53, 54 for checking whether the value added service of the second set has already been activated in the second telecommunications network;
means (51, 52) which in response to the second set value added service not being activated:
determine the subscriber's home location register on the basis of the subscriber's identification data;
ask the subscriber's home location register for the data needed to activate the value added service of the second network.

## Patentansprüche

1. Verfahren zur Verbesserung des Transfers von Erfahrungen mit Diensten eines Teilnehmers von einem Telekommunikationsnetzwerk in ein anderes, mit einem ersten Telekommunikationsnetzwerk und einem zweiten Telekommunikationsnetzwerk und mit einem Netzwerkknoten, der mit dem ersten und dem zweiten Telekommunikationsnetzwerk verbunden ist, wobei Eigenschaften des ersten Telekommunikationsnetzwerks eine erste Gruppe aus Mehrwertdiensten in dem ersten Telekommunikationsnetzwerk freigeben, und Eigenschaften des zweiten Telekommunikationsnetzwerkes eine zweite Gruppe aus Mehrwertdiensten in dem zweiten Telekommunikationsnetzwerk freigeben, wobei jeder Mehrwertdienst der ersten Gruppe eine Kombination aus funktionalem Telekommunikationsnetzwerkeigenschaften des ersten Netzwerks und jeder Mehrwertdienst der zweiten Gruppe eine Kombination aus funktionalen Telekommunikationsnetzwerkeigenschaften des zweiten Netzwerks umfasst, wobei die funktionalen Telekommunikationsnetzwerkeigenschaft durch Aktionen des Mehrwertdienstes, die in einer teilnehmerspezifischen Weise aktiviert werden, anpassbar sind, wobei das Verfahren umfasst
Ausführen (61) einer Prozedur, die eine Mehrwertdienstaktion eines Mehrwertdienstes der ersten Gruppe in dem ersten Telekommunikationsnetzwerk aktiviert,
Erzeugen (62) einer Aktionsaufzeichnung in dem ersten Telekommunikationsnetzwerk, die mindestens Daten zur Identifizierung des Mehrwertdienstes und einer Mehrwertdienstaktion, die in dem ersten Telekommunikationsnetzwerk zu aktivieren ist, enthält,
Übertragen der Aktionsaufzeichnung zu dem Netzwerkknoten;
Zuordnen (64) des Mehrwertdienstes der ersten Gruppe in dem Netzwerkknoten zu einem Mehrwertdienst der zweiten Gruppe, und Zuordnen der Mehrwertdienstaktion des Mehrwertdienstes der ersten Gruppe zu einer Mehrwertdienstaktion des Mehrwertdienstes der zweiten Gruppe;
Übertragen (63) von Daten über die Mehrwertdienstaktion des Mehrwertdienstes der zweiten Gruppe, die sich aus der Zuordnung ergibt, in das zweite Telekommunikationsnetzwerk; und
Anpassen der funktionalen Telekommunikationsnetzwerkeigenschaften des zweiten Telekommunikationsnetzwerks, die in dem Mehrwertdienst der zweiten Gruppe enthalten sind, durch Ausführen der Mehrwertdienstaktion in der Dienstplattform des zweiten Telekommunikationsnetzwerks;
wobei das Verfahren umfasst
Separieren der Daten, die zur Identifizierung des Teilnehmers erforderlich sind, von der Aktionsaufzeichnung in dem Netzwerkknoten, und
Verwenden, in dem Netzwerkknoten, der Daten zur Prüfung, ob der Mehrwertdienst des Teilnehmers unter Berücksichtigung eines verbesserten Transfers an Teilnehmererfahrung zu verarbeiten ist.

2. Verfahren nach Anspruch 1, das ferner die Schritte umfasst:
Einfügen (4.1) der Identifizierungsdaten des Teilnehmers in die Aktionsaufzeichnung;
Ermitteln (4.4) der zum Aktivieren der Mehrwertdienstaktion des zweiten Netzwerks erforderlichen Daten;
Prüfen (4.4), ob die zum Aktivieren der Mehrwertdienstaktion des zweiten Netzwerks erforderlichen Daten verfügbar sind;
in Reaktion darauf, dass die Daten nicht verfügbar sind:
Ermitteln (4.5, 4.6) des Heimpositionsregisters des Teilnehmers auf der Grundlage der Identifizierungsdaten des Teilnehmers;
Anfordern (4.8, 4.9) aus dem Heimpositionsregister des Teilnehmers der Daten, die zum Aktivieren der Mehrwertdienstaktion des zweiten Netzwerks erforderlich sind.

3. Verfahren nach Anspruch 1 oder 2, das ferner die Schritte umfasst:
Erzeugen einer Zuordnungstabelle aus den Zuordnungen zwischen den Mehrwertdienstaktionen der ersten Gruppe und den Mehrwertdienstaktionen der zweiten Gruppe; und
Speichern der Zuordnungstabelle in dem Netzwerkknoten.

4. Verfahren nach Anspruch 1, das ferner die Schritte umfasst:
Einfügen (4.1) der Identifizierungsdaten des Teilnehmers in die Aktionsaufzeichnung;
Ermitteln (4.4) eines entsprechenden Mehrwertdienstes der zweiten Gruppe auf der Grundlage der Daten, die einen Mehrwertdienst der ersten Gruppe kennzeichnen;
Prüfen (4.4), ob der entsprechende Mehrwertdienst der zweiten Gruppe in dem zweiten Telekommunikationsnetzwerk bereits aktiviert ist;
in Reaktion darauf, dass der Mehrwertdienst der zweiten Gruppe nicht aktiviert ist:
Ermitteln (4.5, 4.6) des Heimpositionsregisters des Teilnehmers auf der Grundlage der Identifizierungsdaten des Teilnehmers;
Anfordern (4.8, 4.9) der Daten, die zur Aktivierung des Mehrwertdienstes des zweiten Netzwerkes erforderlich sind, aus dem Heimpositionsregister des Teilnehmers.

5. Telekommunikationsnetzsystem mit einem ersten Telekommunikationsnetzwerk (310, 315, 320, 325, 330, 335) und einem zweiten Telekommunikationsnetzwerk (355, 360, 370, 380) und einem Netzwerkknoten (345), der mit dem ersten und dem zweiten Telekommunikationsnetzwerk verbunden ist, wobei Eigenschaften des ersten Telekommunikationsnetzwerks eine erste Gruppe aus Mehrwertdiensten in dem Telekommunikationsnetzwerk freigeben und Eigenschaften des zweiten Telekommunikationsnetzwerks eine zweite Gruppe aus Mehrwertdiensten in dem zweiten Telekommunikationsnetzwerk freigeben, wobei jeder Mehrwertdienst der ersten Gruppe eine Kombination aus funktionalen Telekommunikationsnetzwerkeigenschaften des Netzwerkes enthält und jeder Mehrwertdienst der zweiten Gruppe eine Kombination aus funktionalen Telekommunikationsnetzwerkeigenschaften des zweiten Netzwerks enthält, wobei die funktionalen Telekommunikationsnetzwerkeigenschaften durch Mehrwertdienstaktionen, die in teilnehmerspezifischer Weise aktiviert werden, anpassbar sind, wobei ein Netzwerkelement (335) des ersten Telekommunikationsnetzwerkes aufweist
eine Einrichtung zum Verarbeiten einer Mehrwertdienstaktion eines Mehrwertdienstes der ersten Gruppe in dem ersten Telekommunikationsnetzwerk;
eine Einrichtung zur Erzeugung einer Aktionsaufzeichnung, die zu einer Mehrwertdienstaktion des Mehrwertdienstes der ersten Gruppe bei Verarbeitung des Mehrwertdienstes der ersten Gruppe gehört, wobei die Aktionsaufzeichnung mindestens Daten zur Identifizierung des Mehrwertdienstes und einer Mehrwertdienstaktion, die in dem ersten Telekommunikationsnetzwerk zu aktivieren ist, enthält; und
eine Einrichtung zur Übertragung der Aktionsaufzeichnung zu dem Netzwerkknoten (345), der mit dem ersten und dem zweiten Telekommunikationsnetzwerk verbunden ist;
wobei der Netzwerkknoten (345) aufweist: eine Einrichtung zur Zuordnung des Mehrwertdienstes der ersten Gruppe zu dem Mehrwertdienst der zweiten Gruppe; eine Einrichtung zur Zuordnung der Mehrwertdienstaktion des Mehrwertdienstes der ersten Gruppe zu der Mehrwertdienstaktion des Mehrwertdienstes der zweiten Gruppe; und eine Einrichtung zur Übertragung von Daten über die Mehrwertdienstaktion des Mehrwertdienstes der zweiten Gruppe, die sich aus der Zuordnung ergibt, zu einem Netzwerkelement des zweiten Telekommunikationsnetzwerks (360);
wobei ein Netzwerkelement (360) des zweiten Telekommunikationsnetzwerks eine Einrichtung zur Anpassung der funktionalen Telekommunikationsnetzwerkeigenschaften des zweiten Telekommunikationsnetzwerks durch Ausführen der zugeordneten Mehrwertdienstaktion des Mehrwertdienstes der zweiten Gruppe aufweist;
wobei der Netzwerkknoten (345) ausgebildet ist zum
Separieren der zur Identifizierung des Teilnehmers erforderlichen Daten von der Aktionsaufzeichnung, und
Verwenden der Daten zum Prüfen, ob der Mehrwertdienst des Teilnehmers unter Berücksichtigung des verbesserten Transfers von Teilnehmererfahrung zu verarbeiten ist.

6. System nach Anspruch 5, wobei das erste und/oder das zweite Telekommunikationssystem ein Mobilkommunikationssystem sind.

7. System nach Anspruch 6, wobei das erste oder das zweite Telekommunikationsnetzwerk funktionale Eigenschaften eines Mobilkommunikationssystems der zweiten Generation, GSM, implementiert, und das erste oder das zweite Telekommunikationssystem funktionale Eigenschaften eines Mobilkommunikationssystems der dritten Generation, WCDMA, implementiert.

8. System nach einem der Ansprüche 5 bis 7, wobei das erste und zweite Netzwerk Mobilnetzwerke sind, die durch einen Betreiber verwaltet werden und die ausgebildet sind, über unterschiedliche Funkschnittstellen zu arbeiten.

9. System nach einem der Ansprüche 5 bis 7, wobei das erste und das zweite Netzwerk Mobilnetzwerke sind, die von zwei unterschiedlichen Betreibern verwaltet werden und die ausgebildet sind, über unterschiedliche Funkschnittstellen zu arbeiten.

10. System nach einem der Ansprüche 5 bis 7, wobei das erste und das zweite Netzwerk solche Netzwerke sind, die von zwei unterschiedlichen Betreibern verwaltet werden und eine ähnliche Endschnittstelle anbieten.

11. Netzwerkknoten (345) für ein Telekommunikationssystem mit einem ersten Telekommunikationsnetzwerk (310, 315, 320, 325, 330, 335) und einem zweiten Telekommunikationsnetzwerk (355, 360, 370, 380), wobei Eigenschaften des ersten Telekommunikationsnetzwerks eine erste Gruppe aus Mehrwertdiensten in dem ersten Telekommunikationsnetzwerk freigeben und Eigenschaften des zweiten Telekommunikationsnetzwerks eine zweite Gruppe aus Mehrwertdiensten in dem zweiten Telekommunikationsnetzwerk freigeben, wobei jeder Mehrwertdienst der ersten Gruppe eine Kombination aus funktionalen Telekommunikationsnetzwerkeigenschaften des ersten Netzwerks enthält und jeder Mehrwertdienst der zweiten Gruppe eine Kombination aus funktionalen Telekommunikationsnetzwerkeigenschaften des zweiten Netzwerks enthält, wobei die funktionalen Telekommunikationsnetzwerkeigenschaften durch Mehrwertdienstaktionen, die in teilnehmerspezifischer Weise aktiviert werden, anpassbar sind, wobei
der Netzwerkknoten (345) umfasst
eine Einrichtung (51, 53) zum Empfangen einer Aktionsaufzeichnung, die zu einer Mehrwertdienstaktion des Mehrwertdienstes der ersten Gruppe gehört, aus einem Netzwerkelement des ersten Telekommunikationsnetzwerks, wobei die Aktionsaufzeichnung zumindest Daten zur Identifizierung des Mehrwertdienstes der ersten Gruppe und einer Mehrwertdienstaktion, die in dem ersten Telekommunikationsnetzwerk zu aktivieren ist, und eine Identität des Teilnehmers enthält;
eine Einrichtung (51, 52) zur Zuordnung eines Mehrwertdienstes der ersten Gruppe zu einem Mehrwertdienst der zweiten Gruppe, und zum Zuordnen einer Mehrwertdienstaktion des Mehrwertdienstes der ersten Gruppe zu einer Mehrwertdienstaktion des Mehrwertdienstes der zweiten Gruppe; und
eine Einrichtung zum Übertragen (51, 52, 54) der Mehrwertdienstaktion der zweiten Gruppe, die sich aus der Zuordnung ergibt, zu einem Netzwerkelement des zweiten Telekommunikationsnetzwerks;
wobei der Netzwerkknoten (345) ausgebildet ist zum
Separieren der zum Identifizieren des Teilnehmers erforderlichen Daten von der Aktionsaufzeichnung; und
Verwenden der Daten zum Prüfen, ob der Mehrwertdienst des Teilnehmers unter Berücksichtigung eines verbesserten Transfers einer Teilnehmererfahrung zu verarbeiten ist.

12. Netzwerkknoten (345) nach Anspruch 11, wobei der Netzwerkknoten ferner aufweist:
eine Einrichtung (51, 52) zum Ermitteln von Daten, die zur Aktivierung der Mehrwertdienstaktion des zweiten Netzwerks erforderlich sind;
eine Einrichtung (51, 52, 53, 54) zum Prüfen, ob der Mehrwertdienst der zweiten Gruppe in dem zweiten Telekommunikationsnetzwerk bereits aktiviert worden ist;
eine Einrichtung (51, 52), die in Reaktion darauf, dass der Mehrwertdienst der zweiten Gruppe nicht aktiviert ist:
das Heimpositionsregister des Teilnehmers auf der Grundlage der Identifizierungsdaten des Teilnehmers ermittelt; und
von dem Heimpositionsregister des Teilnehmers die Daten anfordert, die zur Aktivierung des Mehrwertdienstes der zweiten Gruppe erforderlich sind.

13. Netzwerkknoten nach Anspruch 11 oder 12, wobei der Netzwerkknoten (345) ferner aufweist:
eine Einrichtung (51, 52) zur Erzeugung einer Zuordnungstabelle aus Zuordnungen zwischen den Mehrwertdienstaktionen der ersten Gruppe und den Mehrwertdienstaktionen der zweiten Gruppe;
eine Einrichtung (51, 52) zur Speicherung der Zuordnungstabelle.

14. Netzwerkknoten nach Anspruch 11 oder 12, wobei der Netzwerkknoten ferner aufweist:
eine Einrichtung (51, 53; 55) zum Empfangen der Zuordnungstabelle über die Zuordnungen zwischen den Mehrwertdienstaktionen der ersten Gruppe und den Mehrwertdienstaktionen der zweiten Gruppe;
eine Einrichtung (51, 52) zur Speicherung der Zuordnungstabelle.

15. Netzwerkknoten nach Anspruch 11, wobei der Netzwerkknoten (345) ferner aufweist:
eine Einrichtung (51, 52) zum Ermitteln eines entsprechenden Mehrwertdienstes der zweiten Gruppe auf der Grundlage der Daten, die einen Mehrwertdienst der ersten Gruppe kennzeichnen.
eine Einrichtung (51, 52, 53, 54) zum Prüfen, ob der Mehrwertdienst der zweiten Gruppe in dem zweiten Telekommunikationsnetzwerk bereits aktiviert worden ist;
eine Einrichtung (51, 52), die in Reaktion darauf, dass der Mehrwertdienst der zweiten Gruppe nicht aktiviert ist:
das Heimpositionsregister des Teilnehmers auf der Grundlage der Identifizierungsdaten des Teilnehmers ermittelt;
von dem Heimpositionsregister des Teilnehmers die Daten anfordert, die zur Aktivierung des Mehrwertdienstes des zweiten Netzwerks benötigt werden.

## Revendications

1. Procédé pour améliorer l'expérience de transfert de service d'un abonné d'un réseau de télécommunication à un autre, qui comprend un premier réseau de télécommunication et un second réseau de télécommunication, et un noeud de réseau connecté au premier réseau de télécommunication et au second réseau de télécommunication, les propriétés du premier réseau de télécommunication permettant un premier ensemble de services à valeur ajoutée dans le premier réseau de télécommunication, et les propriétés du second réseau de télécommunication permettant un second ensemble de services à valeur ajoutée dans le second réseau de télécommunication, chaque service à valeur ajoutée du premier ensemble comprenant une combinaison de propriétés de réseau de télécommunication fonctionnel du premier réseau et chaque service à valeur ajoutée du second ensemble comprenant une combinaison de propriétés de réseau de télécommunication fonctionnel du second réseau, les propriétés de réseau de télécommunication fonctionnel susceptibles de s'adapter par des actions de service à valeur ajoutée activées de manière spécifique à l'abonné, le procédé comprenant les étapes suivantes:
exécuter (61) une procédure activant une action de service à valeur ajoutée d'un service à valeur ajoutée du premier ensemble dans le premier réseau de télécommunication,
produire (62) dans le premier réseau de télécommunication un enregistrement d'action qui comprend au moins des données pour identifier le service à valeur ajoutée et une action de service à valeur ajoutée à activer dans le premier réseau de télécommunication;
transférer l'enregistrement d'action au noeud de réseau;
mapper (64) dans le noeud de réseau le service à valeur ajoutée du premier ensemble dans un service à valeur ajoutée du second ensemble, et l'action de service à valeur ajoutée du service à valeur ajoutée du premier ensemble dans une action de service à valeur ajoutée du service à valeur ajoutée du second ensemble;
transférer (63) des données sur l'action de service à valeur ajoutée du service à valeur ajoutée du second ensemble résultant de la cartographie dans le second réseau de communication; et
adapter les propriétés de réseau de télécommunication fonctionnel du second réseau de télécommunication compris dans le service à valeur ajoutée du second ensemble en exécutant l'action de service à valeur ajoutée dans la plate-forme de service du second réseau de télécommunication;
dans lequel le procédé consiste à
séparer, dans le noeud de réseau, les données nécessaires pour identifier l'abonné à partir de l'enregistrement d'action, et
utilisant, dans le noeud de réseau, lesdites données pour vérifier si le service à valeur ajoutée de l'abonné doit être traité en tenant compte du transfert amélioré de l'expérience des abonnés.

2. Procédé selon la revendication 1, comprenant en outre les étapes suivantes:
insérer (4.1) les données d'identification de l'abonné dans l'enregistrement d'action;
déterminer (4.4) les données nécessaires pour activer le service à valeur ajoutée du second réseau;
vérifier (4.4) si les données requises pour activer l'action de service à valeur ajoutée du second réseau sont disponibles;
en réponse aux données non disponibles:
déterminer (4.5, 4.6) le registre de localisation d'origine de l'abonné sur la base des données d'identification de l'abonné;
demander (4.8, 4.9) le registre de localisation d'origine de l'abonné pour les données requises pour activer l'action de service à valeur ajoutée du second réseau.

3. Procédé selon les revendications 1 ou 2, comprenant en outre les étapes suivantes:
créer une table de mappage à partir des correspondances entre les actions de service à valeur ajoutée du premier ensemble et les actions de service à valeur ajoutée du second ensemble; et stocker la table de mappage dans le noeud de réseau.

4. Procédé selon la revendication 1, comprenant en outre les étapes suivantes:
insérer (4.1) les données d'identification de l'abonné dans l'enregistrement d'action;
déterminer (4.4) un service à valeur ajoutée correspondant du second ensemble sur la base des données identifiant un service à valeur ajoutée du premier ensemble;
vérifier (4.4) si le service à valeur ajoutée correspondant du second ensemble est déjà activé dans le second réseau de télécommunication;
en réponse au service à valeur ajoutée du second ensemble qui n'est pas activé;
déterminer (4.5, 4.6) le registre de localisation d'origine de l'abonné sur la base des données d'identification de l'abonné;
demander (4.8, 4.9) le registre de localisation d'origine de l'abonné pour les données requises pour activer le service à valeur ajoutée du second réseau.

5. Système de télécommunication comprenant un premier réseau de télécommunication (310, 315, 320, 325, 330, 335) et un second réseau de télécommunication (355, 360, 370, 380) et un noeud de réseau (345) connecté au premier réseau de télécommunication et au second réseau de télécommunication, les propriétés du premier réseau de télécommunication permettant un premier ensemble de services à valeur ajoutée dans le premier réseau de télécommunication et les propriétés du second réseau de télécommunication permettant un second ensemble de services à valeur ajoutée dans le second réseau de télécommunication, chaque service à valeur ajoutée du premier ensemble comprenant une combinaison de propriétés de réseau de télécommunication fonctionnel du premier réseau et chaque service à valeur ajoutée du second ensemble comprenant une combinaison de propriétés de réseau de télécommunication fonctionnel du second réseau, les propriétés de réseau de télécommunication fonctionnel susceptibles de s'adapter par des actions de service à valeur ajoutée activées de manière spécifique à l'abonné, dans lequel un élément de réseau (335) du premier réseau de télécommunication comprend
des moyens pour traiter une action de service à valeur ajoutée d'un service à valeur ajoutée du premier ensemble dans le premier réseau de télécommunication;
des moyens pour produire un enregistrement d'action lié à une action de service à valeur ajoutée du service à valeur ajoutée du premier ensemble sur le traitement du service à valeur ajoutée du premier ensemble, l'enregistrement d'action comprenant au moins des données pour identifier le service à valeur ajoutée et une action de service à valeur ajoutée à activer dans le premier réseau de télécommunication; et
des moyens pour transférer l'enregistrement d'action au noeud de réseau (345) connecté au premier réseau de télécommunication et au second réseau de télécommunication;
le noeud de réseau (345) comprend des moyens pour mapper le service à valeur ajoutée du premier ensemble dans le service à valeur ajoutée du second ensemble; des moyens pour mapper l'action de service à valeur ajoutée du service à valeur ajoutée du premier ensemble dans une action de service à valeur ajoutée du service à valeur ajoutée du second ensemble; et des moyens pour transférer des données sur l'action de service à valeur ajoutée du service à valeur ajoutée du second ensemble résultant du mappage à un élément de réseau du second réseau de télécommunication (360);
un élément de réseau (360) du second réseau de télécommunication comprend des moyens pour adapter les propriétés de réseau de télécommunication fonctionnel du second réseau de télécommunications en effectuant l'action de service à valeur ajoutée mappée du service à valeur ajoutée du second ensemble;
dans lequel le noeud de réseau (345) est configuré pour
séparer les données nécessaires pour identifier l'abonné à partir de l'enregistrement d'action, et
utilisant lesdites données pour vérifier si le service à valeur ajoutée de l'abonné doit être traité en tenant compte du transfert amélioré de l'expérience des abonnés.

6. Système selon la revendication 5, dans lequel
au moins l'un du premier système de télécommunication et du second système de télécommunication est un système de communication mobile.

7. Système selon la revendication 6, dans lequel l'un du premier réseau de télécommunication et du second réseau de télécommunication met en oeuvre les propriétés fonctionnelles d'un système de communication mobile GSM de seconde génération, et l'un du premier système de télécommunication et du second système de télécommunication met en oeuvre des propriétés fonctionnelles du système de communication mobile WCDMA de troisième génération.

8. Système selon l'une quelconque des revendications 5 à 7, dans lequel le premier réseau et le second réseau sont des réseaux mobiles gérés par un opérateur et agencés pour fonctionner à travers différentes interfaces radio.

9. Système selon l'une quelconque des revendications 5 à 7, dans lequel le premier réseau et le second réseau sont des réseaux mobiles gérés par deux opérateurs différents et agencés pour fonctionner à travers différentes interfaces radio.

10. Système selon l'une quelconque des revendications 5 à 7, dans lequel le premier réseau et le second réseau sont des réseaux gérés par deux opérateurs différents et offrant une interface de terminal similaire.

11. Noeud de réseau (345) pour un système de télécommunication comprenant un premier réseau de télécommunication (310, 315, 320, 325, 330, 335) et un second réseau de télécommunication (355, 360, 370, 380), les propriétés du premier réseau de télécommunication permettant un premier ensemble de services à valeur ajoutée dans le premier réseau de télécommunication et les propriétés du second réseau de télécommunication permettant un second ensemble de services à valeur ajoutée dans le second réseau de télécommunication, chaque service à valeur ajoutée du premier ensemble comprenant une combinaison de propriétés de réseau de télécommunication fonctionnel du premier réseau et chaque service à valeur ajoutée du second ensemble comprenant une combinaison de propriétés de réseau de télécommunication fonctionnel du second réseau, les propriétés de réseau de télécommunication fonctionnel susceptibles de s'adapter par des actions de service à valeur ajoutée activées de manière spécifique à l'abonné, dans lesquelles le noeud de réseau (345) comprend:
des moyens (51, 53) pour recevoir un enregistrement d'action lié à une action de service à valeur ajoutée du service à valeur ajoutée du premier ensemble à partir d'un élément de réseau du premier réseau de télécommunication, l'enregistrement d'action comprenant au moins des données pour identifier le service à valeur ajoutée du premier ensemble et une action de service à valeur ajoutée à activer dans le premier réseau de télécommunication et une identité de l'abonné;
des moyens (51, 52) pour mapper un service à valeur ajoutée du premier ensemble en un service à valeur ajoutée du second ensemble, et une action de service à valeur ajoutée du service à valeur ajoutée du premier ensemble dans une action de service à valeur ajoutée du service à valeur ajoutée du second ensemble; et
des moyens pour transférer (51, 52, 54) l'action de service à valeur ajoutée du second ensemble résultant du mappage à un élément de réseau du second réseau de télécommunication;
dans lequel le noeud de réseau (345) est configuré pour
séparer les données nécessaires pour identifier l'abonné à partir de l'enregistrement d'action, et
utilisant lesdites données pour vérifier si le service à valeur ajoutée de l'abonné doit être traité en tenant compte du transfert amélioré de l'expérience des abonnés.

12. Noeud de réseau (345) selon la revendication 11, dans lequel le noeud de réseau comprend en outre:
des moyens (51, 52) pour déterminer les données nécessaires pour activer le service à valeur ajoutée du second réseau;
des moyens (51, 52, 53, 54) pour vérifier si le service à valeur ajoutée correspondant du second ensemble est déjà activé dans le second réseau de télécommunication;
des moyens (51, 52) qui en réponse au service à valeur ajoutée du second ensemble qui n'est pas activé;
déterminent le registre de localisation d'origine de l'abonné sur la base des données d'identification de l'abonné; et
demandent au registre de localisation d'origine de l'abonné pour les données requises d'activer le service à valeur ajoutée du second ensemble.

13. Noeud de réseau selon les revendications 11 ou 12, où le noeud de réseau (345) comprend en outre:
des moyens (51, 52) pour créer une table de mappage à partir des correspondances entre les actions de service à valeur ajoutée du premier ensemble et les actions de service à valeur ajoutée du second ensemble; des moyens (51, 52) pour stocker la table de mappage.

14. Noeud de réseau selon les revendications 11 ou 12, dans lequel le noeud de réseau comprend en outre:
des moyens (51, 53 ; 55) pour recevoir une table de mappage à partir des correspondances entre les actions de service à valeur ajoutée du premier ensemble et les actions de service à valeur ajoutée du second ensemble; des moyens (51, 52) pour stocker la table de mappage.

15. Noeud de réseau selon la revendication 11, dans lequel le noeud de réseau (345) comprend en outre:
des moyens (51, 52) pour déterminer un service à valeur ajoutée correspondant du second ensemble sur la base des données identifiant un service à valeur ajoutée du premier ensemble;
des moyens (51, 52, 53, 54) pour vérifier si le service à valeur ajoutée correspondant du second ensemble est déjà activé dans le second réseau de télécommunication;
des moyens (51, 52) qui en réponse au service à valeur ajoutée du second ensemble qui n'est pas activé;
déterminent le registre de localisation d'origine de l'abonné sur la base des données d'identification de l'abonné;
demandent au registre de localisation d'origine de l'abonné pour les données requises d'activer le service à valeur ajoutée du second ensemble.
